## Europäisches Patentamt

## European Patent Office

## Office européen des brevets

(19)

(11) Publication number: **0 241 601**
**B1**

(12)

# EUROPEAN PATENT SPECIFICATION

(45) Date of publication of the patent specification:
07.02.90

(51) Int. Cl.⁴: **G01N 27/416**

(21) Application number: 86200640.0

(22) Date of filing: 15.04.86

(54) Device for testing the integrity of an electrode in a potentiometric measuring electrode system.

(43) Date of publication of application:
21.10.87 Bulletin 87/43

(45) Publication of the grant of the patent:
07.02.90 Bulletin 90/6

(84) Designated Contracting States:
CH DE FR GB IT LI NL

(56) References cited:
US-A- 4 189 367
US-A- 4 468 608

MEASUREMENT TECHNIQUES, vol. 27, no. 6, June 1984, pages 568-571, Plenum Publishing Corp., New York, US; I.N. ANDREEV: "A method of switching measurement channels in an instrument for checking glass electrodes"
PATENTS ABSTRACTS OF JAPAN, vol. 10, no. 64 (P-436)[2121], 14th March 1986; & JP-A-60 205 345 (YOKOKAWA HOKUSHIN DENKI K.K.) 16-10-1985

(73) Proprietor: Yokogawa Electrofact B.V., Radiumweg 30, NL-3812 RA Amersfoort(NL)

(72) Inventor: Beijk, Jozeph Michael, van Tuyllstraat 1A, NL-3829 AA Hooglanderveen(NL)
Inventor: Both, Teunis, Kropaart 13, NL-3648 HX Wilnis(NL)

(74) Representative: de Wit, Gerard Frederik, Ir. et al, Octrooi- en Merkenbureau De Wit B.V. Breitnerlaan 146, NL-2596 HG Den Haag(NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a device as described in the preamble of claim 1.

Such a device is known from US-A 3 661 748, which describes a testing circuit for a series connection of a potentiometric electrode, such as a pH electrode and a reference electrode.

In this circuit an A.C. voltage is injected in the said series connection and phase-sensitively measuring the A.C. current passing through said circuit. The A.C. voltage is applied to the system via an auxiliary electrode in contact with the liquid monitored by said ion sensitive electrode.

Further US-A 4 189 367 describes an electrode testing system in which during tests a high impedance ion selective membrane and the reference electrode are in series connection. This impedance of an ion selective membrane is considerably greater than that of a reference electrode, for instance a factor 10 greater than the combined impedance of the reference electrode and the solution being measured. In practice the impedance of a reference electrode is often about $10^{-3} - 10^{-5}$ smaller than that of a high resistance ion selective electrode such as a glass electrode.

In both U.S. patent specifications the measuring circuit is maintained intact during the testing period.

The result hereof is, that no individual test of the ion sensitive electrode and the reference electrode is possible and that test values of each of them may be relatively inaccurate, whereas several types of failures may escape discovery, as may be clear from the following.

Apart from high resistance membrane electrodes, such as glass electrodes, low impedance potentiometric electrodes exist, such as redox electrodes, which are selectively sensitive to e.g. Na, K or other ions. When testing an electrode system many types of electrode failures may occur.

Apart from a short circuit originating from for instance a crack in a glass electrode, mis-reading may be due to many other causes:

a) The connection with an electrode may be interrupted. In that instance its reading is highly constant, but may be in the region of normal readings.

b) The electrode may be soiled by a deposit, so that its impedance increases and its sensitivity decreases, causing mis-readings.

c) The reference electrode may fail, due to loss of electrolyte. In that instance its impedance will increase and its output may float, so that the value indicated by the electrode system is false, but remains within the region of possible readings.

d) The reference electrode is poisoned. For instance in case of a reference electrode of the type metal-metal halide electrolyte this may lead to a very strong increase of impedance, even isolation of the electrode from the electrolyte, which causes mis-readings.

e) The membrane of the reference electrode between its electrolyte and the liquid being monitored may clog, leading to a high impedance of the reference electrode, which can even be put out of action.

In practice failure of the reference electrode is a greater danger than that of for instance a glass electrode.

Further it is for a highly reliable device desired to be able to indicate not only the break-down of a high impedance, but also other types of failure.

Accordingly it is a first object of the invention to provide such a highly reliable monitoring system.

More specifically it is an object of the invention to provide a monitoring device, which is able to detect failure of each of the different electrodes of an electrode system for measuring an ion concentration or a redox potential.

Still a further object is to provide a device, which allows detection of as well too high as too low impedances.

Accordingly the invention provides in its broadest aspect a device as defined in claim 1.

Because with the invention the measuring circuit is not used during the test periods the injected twodirectional electrical quantity cannot disturb the measurement, so that a higher accuracy is obtained.

In several electrode systems for measuring an ion concentration in a solution a potential equalization electrode is present.

Such an electrode serves the purpose to clamp the electrical potential of the liquid to be measured at a predetermined voltage level, for instance to prevent that the measuring electronics or instruments receive voltages outside their working region.

Such an electrode may be of an inoxydable metal, such as stainless steel. For normal measurements it cannot replace the so-called reference electrode, which preferably contains a metal, a halide of that metal and a halide electrolyte. For the purposes of the invention the potential equalization electrode is, however, quite suitable, because any d.c. voltage component does not play any part when using the device of the invention.

Accordingly a preferred embodiment of the invention provides that the auxiliary electrode is the potential equalization electrode.

In the known system according to US-A 4 189 367 the electrical quantity to be injected in the system is a current. This may result in difficulties in case of a circuit interruption. Accordingly it is preferred to provide that the twodirectional electrical quantity is a square wave voltage.

A square wave voltage has the advantage that a very stable level is present for sampling. When sampling in the second half of the duration of one of the voltage levels, the sample value will be practically stable.

With the known method of US-A 4 189 367 the temperature of the liquid is measured and the value of the electric current to be supplied to the electrode system is determined on base of said measured temperature. Such a temperature compensation is applied in the known system, because the impedance of a glass membrane is strongly dependent on the temperature and in fact doubles for a temperature increase of about 10°C.

When applying the invention an analogues temperature compensation can be applied by varying the applied voltage or the circuit for measuring the current flowing as a result of this voltage, a further possibility being to measure the impedance of a monitored electrode and to compare the impedance with a value calculated on base of the liquid temperature.

The invention is very suitable for successively testing the electrodes of an ion sensitive electrode system. A further advantage of the invention is, that it is possible to switch in a measuring circuit adapted for the monitored impedance. In a practical case a glass membrane is compared with a resistance which is considerably greater, for instance 5 times greater than a resistance to be used for comparing with a reference electrode.

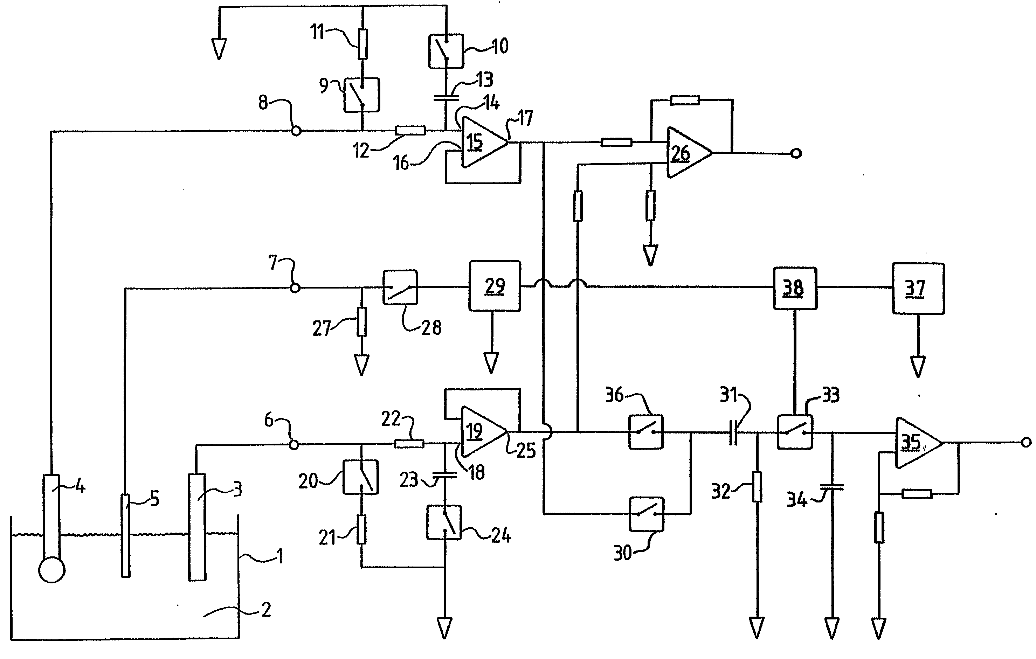

In the following the invention is further elucidated on hand of an example of a schematical electronical circuit shown in the single figure of the drawing.

In the drawing reference 1 indicates a vessel containing a liquid 2, of which an ion concentration, for instance the H-ion concentration pH or the sodium ion concentration pNa should be measured. This is done with a well known ion sensitive electrode system having a reference electrode 3 and an ion sensitive high impedance glass electrode 4.

A potential equalization electrode 5 is also immerged in the liquid 2.

The electrodes 3, 4 and 5 are connected to terminals 6, 7 and 8 respectively, which are the inputs of a measuring and testing system of the invention.

During normal ion concentration measurements switch 9 is opened and switch 10 closed. Consequently a comparing resistor 11, having a value of for instance 10 MOhm is out of circuit and a filter formed by a resistor 12 and a capacitor 13 is active to remove disturbances picked up in the lead between the electrode 4 and the terminal 8. The smoothed voltage of terminal 8 is fed to the positive input 14 of an operational amplifier 15, the input 16 of which is connected to its output 17. The operational amplifier serves as an impedance match and its output voltage corresponds directly to the voltage of input 14.

In a corresponding way terminal 6 is connected to the positive input 18 of an operational amplifier 19, switch 20 being open, so that a comparing resistor 21 of for instance 2 MOhm is out of circuit, whereas a disturbance diverting filter 22, 23 is active, because switch 24 is closed.

The output 25 of an operational amplifier 19 is connected to the positive input of an operational amplifier 26, the negative input of which is connected to the output 17 of operational amplifier 15. The output of operational amplifier 26 is used as a measurement of the ion concentration.

Terminal 7 of potential equalization electrode 5 is connected to earth by a relatively small resistor 27 of for instance 10 kOhm. Switch 28 is open.

When testing any of the electrodes 3 or 4 the switch 28 is closed and a low impedance symmetrical square wave voltage generator 29 delivering a square wave voltage of for instance 1 Volt and for instance 40 Hz is connected to electrode 5 via terminal 7.

When testing electrode 4 switch 9 is closed, so that in the circuit earth, electrode 5, liquid 2, electrode 4 resistor 11, earth the a.c. voltage of input 14 of operational amplifier 15 mainly depends on the impedance value of electrode 4 and the liquid 2.

An extremely high impedance points to a disrupture of a connection or no liquid 2 between the electrodes 4 and 5. An impedance which is higher than may be expected, but not as high as results from a disrupture, points to soiling of at least one of the electrodes 4 and 5 or an extremely low conductivity of the liquid 2. A low impedance points to a break down of electrode 4.

The output of operational amplifier 15 is fed to a capacitor 31 of for instance 2 μF through a switch 30, which is closed when testing electrode 4.

Capacitor 31 is connected to earth via a resistor 32 of for instance 10 kOhm.

A sampler switch 33 is adapted to close during a short period of the duration of one of the levels of the square wave voltage, so that samples of this level are fed to a sample holding capacitor 34, connected to the positive input of an output operational amplifier 35. The voltage on the output of operational amplifier 35 is a measure for the impedance of electrode 4 and the liquid 2, independent on any failure of reference electrode 3. Further this impedance can be measured even in the region of very high impedances pointing to a rupture of leads.

Further the filter circuit 12, 13 is disrupted, because of opening switch 10, so that it does not influence the measurement.

When testing electrode 4 switch 20 is open in order to prevent a shunt circuit via relatively small resistor 21 to earth. Switch 24 may be closed, whereas switch 36 is open to prevent interference from electrode 3.

For testing reference electrode 3 switch 20 is closed and switch 24 is opened. Consequently the filter circuit 22, 23 is put out of action and resistor 21 is connected in series with the impedance of electrodes 5 and 3 and the liquid 2 connecting them. At the same time resistor 11 is switched off by opening switch 9 and filter circuit 12, 13 activated by closing switch 10.

Switch 28 for supplying the square wave voltage is still closed, but the connection to the blocking capacitor 31 is through switch 36, whereas switch 30 is opened.

In the circuit earth, electrode 5, liquid 2, reference electrode 3, resistor 21, earth the impedance of the reference electrode 3 is compared to that of resistor 21.

A high impedance value may be an indication of a lead rupture, soiling of the outer membrane, loss of electrolyte or poisoning.

A low impedance may point to some type of short circuit.

When testing electrodes 3 or 4 the output of operational amplifier 26 has no relevancy what's however with any quantity to be measured and should be neglected.

Auxiliary electrode 5 is of a type that has little chance to break down. It is, however, possible that it is covered by an insulating deposit. In that instance, firstly an increase of the impedance measurement of electrode 3 will show up, which itself probably will have some additional resistance due to an own deposit.

Because of the normally high resistance value of electrode 4 such a failure would be less clear in case only the impedance of that electrode would have been measured. Moreover a synchronous impedance increase of electrodes 4 and 3 could be an indication, that something is wrong.

With the invention monitoring of the temperature may be combined with adaption of the amplitude of the square wave voltage from generator 29, adaption of resistor 11 or simply varying the region in which the impedance value has to be. Also it is possible to use the invention with other electrodes, such as metal electrodes for redox measurements. Such electrodes have a low impedance value, but in case of soiling, poisoning or rupture of connections may show high impedances, always indicating any type of failure.

Though unnecessary further switching means may be provided to switch off any electrode not included in any test circuit at the moment of test.

In order to synchronize square wave voltage generator 29 with the sampling switch 33 a square wave voltage generator may provide a square wave voltage having ten times the frequency of generator 29. The generator 37 feeds a counter 38, which sends the first five out of each ten pulses toward 29 and the ninth and the tenth to switch 33.

## Claims

1. Device for testing the integrity of an electrode in an electrode system having an ion concentration or redox potential measuring electrode (4) and a reference electrode (3), which system is included in a measuring circuit (4, 8, 15, 26 and 3, 6, 19, 26), which device is provided with means (29) for generating an electrical test quantity and means (28) to inject this quantity in a circuit containing an auxiliary electrode (5), characterized by switching means (9, 30 respectively 20, 26) for forming a test circuit containing the auxiliary electrode (5), the means for injecting the said quantity and only one of the measuring electrode (4) and the reference electrode (3).

2. Device according to claim 1, characterized in that as auxiliary electrode a potential equalization electrode is used.

3. Device according to claim 1 or 2, characterized by additional switching means (9, 20) to include a balance impedance (11, 21) in the test circuit for either the measuring electrode (4) or the reference electrode (3).

4. Device according to claim 1, 2 or 3, characterized in that said means (29) for generating an electrical test quantity are adapted to generate a square wave voltage having equal positive and negative levels.

5. Device according to claim 4, characterized in that the test circuits are connected to a sampling and holding circuit (33, 34) synchronized by a synchronization means (38).

## Patentansprüche

1. Vorrichtung zur Prüfung der Unversehrtheit einer Elektrode in einem Elektrodensystem mit einer eine Ionenkonzentration oder Redoxpotential messenden Elektrode (4) und eine Referenzelektrode (3), welches System aufgenommen ist in einer Messkette (4, 8, 15, 26 und 3, 6, 19, 26), welche Vorrichtung versehen ist mit Mitteln (29) zur Erzeugung einer elektrischen Testgrösse und Mitteln (28) um diese Grösse in einer Kette, die eine Hilfselektrode (5) enthält, einzubringen, gekennzeichnet durch Schaltmittel (9, 30 beziehungsweise 20, 26) zur Bildung einer Testkette die die Hilfselektrode (5), die Mittel zur Einbringung der genannten Grösse und nur eine der Messelektrode (4) und die Referenzelektrode (3) enthält.

2. Vorrichtung nach Anspruch 1, dadurch gekennzeichnet, dass als Hilfselektrode eine Potentialegalisierungselektrode benutzt wird.

3. Vorrichtung nach Anspruch 1 oder 2, gekennzeichnet durch ergänzende Schaltmittel (9, 20) zur Aufnehmung einer Balansimpedanz (11, 21) in der Testkette für entweder die Messelektrode (4) oder die Referenzelektrode (3).

4. Vorrichtung nach Anspruch 1, 2 oder 3, dadurch gekennzeichnet dass die genannten Mittel (29) zur Erzeugung einer elektrischen Testgrösse geeignet sind eine Rechteckspannung mit gleichen positiven und negativen Pegeln zu erzeugen.

5. Vorrichtung nach Anspruch 4, dadurch gekennzeichnet, dass die Testketten mit einer Muster- und Haltekette (33, 34), die durch Synchronisationsmittel (38) synchronisiert ist, verbunden sind.

## Revendications

1. Appareil pour tester l'intégrité d'une électrode dans un système d'électrodes contenant une électrode de mesure d'une concentration ionique ou potential redox (4) et une électrode de référence (3), lequel système est inclu dans un circuit de mesure (4, 8, 15, 26 et 3, 6, 19, 26), lequel appareil a été prévu des moyens (29) pour générer une quantité électrique de test et des moyen (28) pour injecter cette quantité dans un circuit contenant une électrode auxiliaire (5), caractérisé au moyen de commutation (9, 30 resp. 20, 26) pour former un circuit de test contenant l'électrode auxiliaire (5), les moyens pour injecter ladite quantité et seulement une des électrodes de mesure (4) et l'électrode de référence (3).

2. Appareil suivant la revendication 1, caractérisé en ce qu'une électrode d'égalisation est employée comme électrode auxiliaire.

3. Appareil suivant la revendication 1 ou 2, caractérisé par des moyens additionnels de commutation (9, 20) pour inclure une impédance de balance (11, 21) dans le circuit de test pour soit d'électrode de mesure (4) soit l'électrode de référence (3).

4. Appareil suivant la revendication 1, 2 ou 3, caractérisé en ce que lesdits moyens (29) pour générer une quantité électrique de test sont adaptés pour générer une voltage d'onde carrée ayant des niveaux égales positif et négatif.

5. Appareil suivant la revendication 4, caractérisé en ce que les circuits de test sont connectés à un circuit de sondage et de retention, synchronisé par un moyen des synchronisation.